# EUROPEAN PATENT APPLICATION

(11) **EP 4 775 813 A1**
(43) Date of publication of application: **15.07.2026**
(21) Application number: 25222059.5
(22) Date of filing: 10.12.2025
(51) Int. Cl.: F02C 3/22, F02C 7/224

(54) **GAS TURBINE ENGINE FUEL SYSTEM**

(30) Priority: 09.01.2025 GB 202500235
(71) Applicant: Rolls-Royce plc, London N1 9FX (GB)
(72) Inventor: Bacic, Marko, Derby, DE24 8BJ (GB)
(74) Representative: Rolls-Royce plc

(57) **Abstract**

A fuel system for a hydrogen fuelled gas turbine engine (201). The fuel system comprises a main hydrogen fuel line (206) configured to provide hydrogen fuel to a combustor (203) of the gas turbine engine (201) and a closed loop heat exchange fluid line (207) comprising a heat exchange fluid. The fuel system further comprises a first heat exchanger (208) configured to exchange heat between gas turbine engine compressor bleed air and heat exchange fluid in the heat exchange fluid line (207), a second heat exchanger (209) downstream of the first heat exchanger (208) in heat exchange fluid flow configured to exchange heat between the heated heat exchange fluid and hydrogen in the main hydrogen fuel line, and a third heat exchanger (215) downstream in main hydrogen fuel flow of the second heat exchanger (209) in main hydrogen fuel flow configured to exchange heat between a further engine fluid and heated hydrogen fuel.

## Description

### TECHNICAL FIELD

This disclosure relates to a fuel system for a hydrogen fuelled gas turbine engine, an engine incorporating such a fuel system, and methods of operating such a fuel system.

### BACKGROUND

In order to limit emissions of carbon dioxide, use of hydrogen as an alternative to hydrocarbon fuel in gas turbine engines has historically only been practical in land-based installations. However, more recently there has been interest in aircraft powered by hydrogen stored at cryogenic temperatures, as either a compressed gas, a supercritical fluid, or a liquid.

Challenges of operating such gas turbine engines include managing temperatures of the cryogenically cooled hydrogen and other engine fluids such as oil. Hydrogen is highly flammable, and this may pose hazards when heating hydrogen.

### SUMMARY

In a first aspect there is provided a fuel system for a hydrogen fuelled gas turbine engine, the fuel system comprising:
a main hydrogen fuel line configured to provide hydrogen fuel to a combustor of the gas turbine engine;
a closed loop heat exchange fluid line comprising a heat exchange fluid;
a first heat exchanger configured to exchange heat between air and heat exchange fluid in the heat exchange fluid line;
a second heat exchanger downstream of the first heat exchanger in heat exchange fluid flow configured to exchange heat between the heated heat exchange fluid and hydrogen in the main hydrogen fuel line; and
a third heat exchanger downstream in heat exchange fluid flow of the second heat exchanger and upstream in heat exchange fluid flow of the first heat exchanger and configured to exchange heat between a further engine fluid and heat exchange fluid.

Advantageously, the hydrogen fuel is heated prior to combustion, while further engine fluid is cooled. Direct heat exchange between air and hydrogen is avoided, thereby reducing the risk of fire. The system also provides for cooling of the system by rejecting heat to hydrogen, without the complexities and operational limitations associated with designing an oil to hydrogen heat exchanger.

The first heat exchanger may be configured to exchange heat between heat exchange fluid and one or more source of engine core air, such as engine compressor bleed air or turbine air. Alternatively, the first heat exchanger may be configured to exchange heat between heat exchange fluid and fan bypass air.

The fuel system may comprise an auxiliary combustor configured to combust hydrogen fuel with core compressor bleed air prior to provision of the core compressor bled air to the first heat exchanger. Advantageously, further heat input can be provided to the hydrogen fuel via combustion.

The fuel system may comprise a second heat exchanger hydrogen bypass line configured to selectively bypass hydrogen around the second heat exchanger.

The fuel system may comprise a heat exchange fluid pump configured to drive flow around the closed loop heat exchange fluid line.

The heat exchange fluid pump may be provided downstream of the second heat exchanger and upstream of the third heat exchanger in heat exchange fluid flow. Advantageously, the pump operates on low temperature heat exchange fluid, thereby reducing pump work.

The heat exchange fluid line is configured to contain a heat exchange fluid comprising an inert gas such as helium or nitrogen. Alternatively, the heat exchange fluid may comprise Therminol.

The fuel system may comprise a controller configured to control hydrogen fuel temperature and further engine fluid temperature. The controller may be configured to control hydrogen fuel temperature by controlling one or more of compressor bleed air flow rate, auxiliary combustor fuel flow rate, heat exchange fluid flow rate, and second heat exchanger bypass flow rate.

The controller may be configured to control engine oil temperature by controlling hydrogen fuel temperature at an outlet of the second heat exchanger.

The controller may be configured to control engine lubricant temperature to a target temperature of between 230 and 340 Kelvin.

The controller may be configured to control hydrogen fuel combustor delivery temperature to a temperature between 60 to 800 K.

According to a second aspect there is provided a propulsion system comprising a gas turbine engine and a fuel system in accordance with the first aspect.

### BRIEF DESCRIPTION OF THE DRAWINGS

An embodiment will now be described by way of example only with reference to the accompanying drawings, which are purely schematic and not to scale, and in which:
Figure 1 shows a hydrogen-fuelled airliner comprising a propulsion system comprising hydrogen-fuelled turbofan engines; and
Figure 2 is a block diagram of a fuel system of the propulsion system of the aircraft of figure 1;

### DETAILED DESCRIPTION

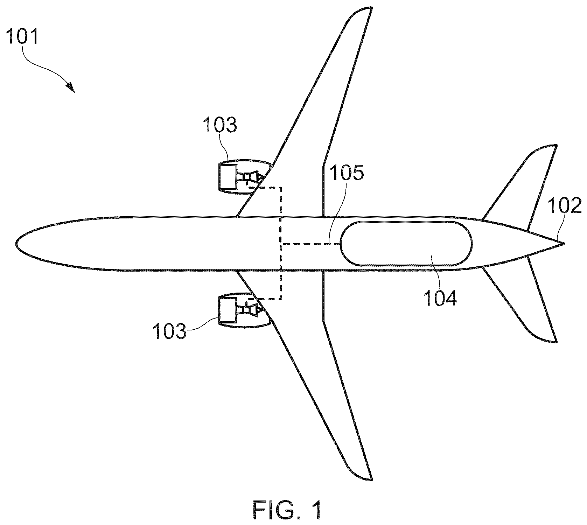

A hydrogen-fuelled airliner is illustrated in Figure 1. In this example, the airliner 101 is of substantially conventional tube-and-wing twinjet configuration with a central fuselage 102 and a propulsion system comprising substantially identical underwing-mounted turbofan engines 103.

A hydrogen storage tank 104 is located in the fuselage 102. The hydrogen storage tank 104 is a cryogenic hydrogen storage tank and thus stores the hydrogen fuel in a low temperature state, in a specific example at 22 Kelvin. In this example, the hydrogen fuel is pressurised to a pressure from around 1 bar to around 4 bar, in a specific example 4 bar. As will be appreciated, storing the hydrogen fuel at a higher pressure would necessitate heavier tanks to contain the pressure, and increase the risk of leaks. On the other hand, a lower pressure would reduce the boiling point of the hydrogen, requiring a lower temperature in the tank, and would risk cavitation and / or two-phase flow in downstream hydrogen plumbing.

In alternative embodiments, the hydrogen may be stored as a compressed or supercritical fluid at high pressures and low temperatures. For example, the hydrogen may be stored at between 22 and 200 Kelvin, and at pressures between 100 and 700 Bar.

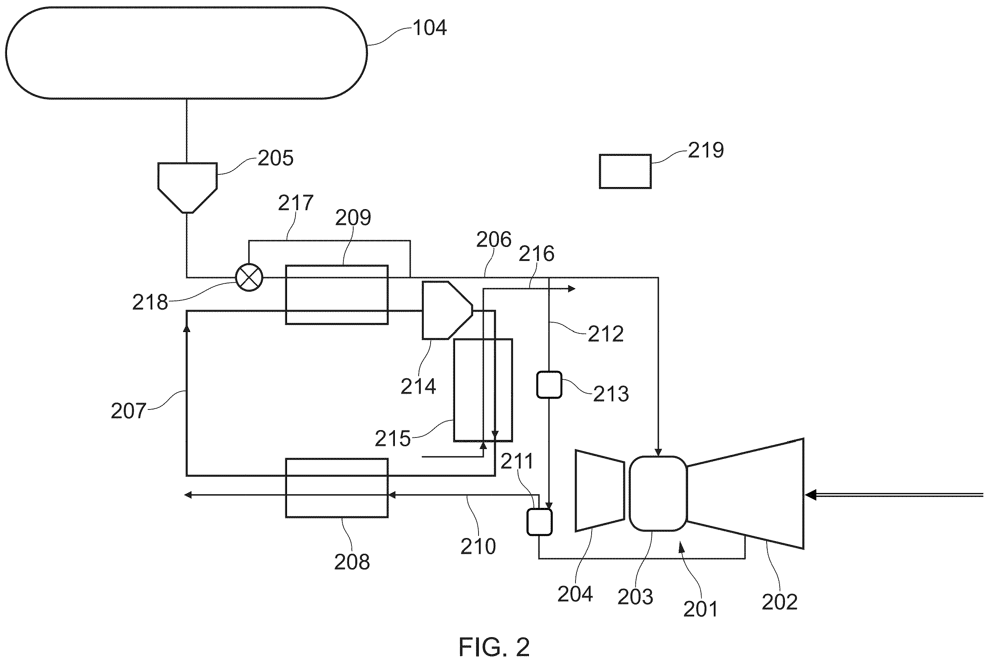

A block diagram of one of the propulsion systems comprising one of the engines 103 and its associated fuel system is shown in Figure 2.

The turbofan engine 103 comprises a core gas turbine 201.

The core gas turbine 201 comprises, in fluid flow series, at least one compressor 202 (and possibly separate low and high-pressure compressors), a core combustor 203 and a turbine system 204 (which typically comprises separate low and high-pressure turbines). The compressor 202 is driven by the turbine 204 via a shaft (not shown), or separate shafts where multiple compressors and turbines are provided. A fan (not shown) is typically provided to provide propulsive thrust in addition to that generated by the engine core. It will be appreciated that in alternative embodiments, the core gas turbine could be of three-shaft configuration, and / or could comprise a reduction gearbox between the turbine and fan.

In operation, hydrogen fuel is pumped from the hydrogen storage tank 104 by one or more pumps 205 and into a main fuel conduit 206 which ultimately delivers fuel to the core combustor 203.

Where the tank 104 stores liquid hydrogen, the pump 205 is typically configured to pump liquid hydrogen, rather than primarily to pump gaseous or supercritical hydrogen. In some embodiments, a plurality of pumps in series and / or parallel may be provided. Where the tank 104 is configured to store gaseous hydrogen, the pump 205 is configured to pump gaseous hydrogen, or is omitted entirely.

As will be appreciated, it is desirable to increase the temperature of the fuel from the low temperature storage condition to a temperature much closer to the firing temperature of the core gas turbine 201; This may be subject to the constraint of not exceeding the autoignition temperature of the hydrogen fuel prior to admission into the combustor 207. In an example, the injection temperature is from 250 to 300 kelvin, for example 250 kelvin. In some cases, it may be desirable to increase the fuel temperature to above an icing temperature, such as 273 Kelvin.

A problem associated with heating hydrogen is the high flammability of hydrogen. Accordingly, the inventors have found that it is desirable to provide a heating system in which contact between air or oxygen and hydrogen is prevented prior to the hydrogen fuel reaching the combustor 203. Accordingly, the present disclosure provides a hydrogen fuel heating system which can efficiently heat the hydrogen prior to combustion, while reducing the likelihood of direct contact between air and hydrogen.

In the present embodiment, a closed-loop heat exchange fluid line 207 is provided. The closed-loop heat exchange fluid line 207 is configured to provide a conduit to a heat exchange fluid that is compatible with the temperatures encountered by the fluid (namely that of liquid hydrogen and compressor bleed air). The heat exchange fluid is preferably also inert, i.e. non-flammable, or at a minimum does not interact with hydrogen in a hazardous manner. It is desirable that the heat exchange fluid remains a fluid (e.g. a gas, liquid or supercritical fluid) throughout operation, and does not degrade at the temperatures that it will be subjected to in operation. Suitable heat exchange fluids include helium and nitrogen, though it will be understood that alternative heat exchange fluids could be used. In one embodiment, Therminol is used, as this has good heat exchange properties, and does not interact hazardously with hydrogen.

The closed-loop heat exchange line 207 comprises first, second ad third heat exchangers 208, 209, 215.

The first heat exchanger 208 is configured to exchange heat between the heat exchange fluid within the heat exchange fluid line 207 and air bled from the gas turbine engine compressor 202 via a bleed air line 210. In other embodiments, the air may be provided from a different core engine source, such as a turbine bleed, which would provide higher temperature air, but may result in reduced engine power output. In a still further alternative, lower temperature bypass air may be used. Such air is at a higher temperature than the hydrogen fuel, but the lower temperature difference may require a larger first heat exchanger.

An optional auxiliary combustor 211 is provided upstream in bleed air flow of the first heat exchanger 208. The auxiliary combustor 211 is provided with fuel bled from the main hydrogen fuel conduit 206 via a fuel bleed line 212 and is configured to combust the bled air and fuel to produce a high temperature exhaust air, which is provided to the first heat exchanger 208. A further optional auxiliary heater 213 may be provided, which is configured to warm fuel in the fuel bleed line 212 prior to delivery to the auxiliary combustor 211. The auxiliary heater 213 could for example comprise an electric resistance heater. In one embodiment, the auxiliary combustor 211 could be replaced by an electric heater (not shown), or a recuperator heat exchanger (not shown).

Accordingly, the heat exchange fluid within the heat exchange fluid line 207 is heated by heat exchange with the relatively higher temperature compressor bleed air or auxiliary combustor exhaust gases in the first heat exchanger 208, which thereby raises the temperature of the heat exchange fluid downstream of the first heat exchanger 208. However, there is no risk of fire within this line, in view of the inert gas provided therein.

The second heat exchanger 209 is provided downstream in heat exchange fluid flow of the first heat exchanger 208. It will be appreciated that the heat exchange fluid flows in a closed loop, and so "downstream", will be understood to refer to the second heat exchanger 209 being positioned and arranged such that the heat exchange fluid will have interacted with the first heat exchanger 208, such that the heat exchange fluid is warmed prior to entry to the second heat exchanger 209.

The second heat exchanger 209 is configured to exchange heat between the warmed heat exchange fluid and the relatively cold hydrogen in the main hydrogen fuel conduit 206. Consequently, the hydrogen fuel is warmed by the compressor 202 bleed air and / or auxiliary combustor 211 exhaust air, without a risk of direct contact between hydrogen and air. As will be understood, in the event of a failure of the second heat exchanger 209, hydrogen fuel may leak into the heat exchange fluid line 207, or heat exchange fluid may leak into the hydrogen fuel conduit 206. In either case however, there is no risk of fire, since neither fluid contains oxygen. Accordingly, the risk of fire is minimised.

Similarly, failure of the first heat exchanger 208 may cause heat exchange fluid to leak into the bleed air line 210, or bleed air (or combustion gases) may leak into the heat exchange fluid line 207. Again though, since neither of these fluids comprise a fuel, fire risk is again reduced.

In order to maintain pressure within the heat exchange fluid line 207, and to induce flow of the fluid within the line 207, a heat exchange fluid pump 214 is provided. Where the heat exchange fluid is compressible, the pump may comprise a compressor.

The fuel system also comprises a third heat exchanger 215. The third heat exchanger is configured to exchange heat between heat exchange fluid heated cooled by the second heat exchanger 209, and a further engine fluid. In the present embodiment, the further engine fluid is a lubricant such as oil in an oil line 216. In alternative embodiments, the further engine fluid may comprise a motive fluid such as hydraulic fluid.

The third heat exchanger 215 is provided downstream in heat exchange fluid flow of the second heat exchanger 209 and upstream in heat exchange fluid low of the first heat exchanger 208. At this point, the heat exchange fluid is cooled by the hydrogen to a temperature suitable for cooling the oil, without overcooling the oil (which would lead to congealing or freezing of the oil), but while having a sufficient temperature delta to provide for adequate oil cooling. Accordingly, the oil within the oil line 216 is cooled, thereby providing a cooling function for the oil system.

Additional advantages are provided by this system. Since neither the heat exchange fluid line 207 nor the oil line 216 contains air, no fire hazard is presented by direct heat exchange between these fluids. Such a system also reduces the work required by the heat exchange fluid pump 214, in view of the lower temperatures in that heat exchange fluid line 207.

Additionally, the inventors have found during system simulations that a problem occurs where hydrogen is used to directly cool oil. In such cases, at some flight conditions (such as flight idle), the relatively small fuel flow results in high oil temperatures. Accordingly, the system must be designed with a relatively large hydrogen-oil heat exchanger. This may then lead to over-cooling of the oil at high fuel flow conditions, such as at take-off. Accordingly, such a system may necessitate a heat exchanger bypass circuit, which adds further weight, cost and complexity. Material requirements of a hydrogen oil heat exchanger (e.g. resistance to hydrogen embrittlement) may also increase weight. In contrast, in the present system, only a single heat exchanger is required to handle hydrogen.

Accordingly, a fuel and oil system is provided which provides efficient fuel heating and efficient oil cooling, while having a low fire risk, and avoiding the higher cost and complexity of a system having a hydrogen-oil heat exchanger. In view of the relatively large heat capacity available in the fuel, further oil coolers such as oil air heat exchangers can be omitted. The system is also self-regulating, and typically allows for control of oil and fuel temperatures within acceptable limits without a requirement for further bypass or flow rate valves. Heat rejected from the oil system is reintroduced to the fuel system, before being employed in the main gas turbine engine core cycle, thereby providing improved thermodynamic efficiency. Furthermore, the additional fuel heating provided by the oil system can reduce a heating requirement from the bleed air and / or auxiliary combustor 211, thereby increasing overall propulsion system efficiency.

The system has been modelled by the inventors to determine suitable operating conditions.

In general, the temperature of the hydrogen fuel downstream of the second heat exchanger must be sufficiently low to cool the oil to avoid degradation of the oil, but not low enough to congeal the oil. Accordingly, the heat exchangers 208, 209 are sized and the bleed air line 210 and auxiliary combustor 211 are controlled by a controller 219 to provide a hydrogen fuel temperature of between 230K and 340K. In one embodiment, the system may be controlled to maintain the hydrogen fuel temperature at the inlet to the third heat exchanger 215 to between 240 and 273K.

In order to maintain the hydrogen fuel within this specific temperature range, a second heat exchanger bypass line 217 may be provided in some embodiments, though such a system is preferably omitted. Flow through the bypass line 217 is controlled via a valve 218, which selectively modulates flow through the second heat exchanger 209 or bypass line 217. The bypass line 217 re-joins the main fuel conduit 206 downstream of the second heat exchanger 209, and upstream of the third heat exchanger 215. Accordingly, temperature of hydrogen entering the third heat exchanger 215 can be controlled by controlling the valve 218, with more bypass flow generally resulting in a lower temperature at the third heat exchanger 215 fuel inlet temperature, and more second heat exchanger 209 flow resulting in a higher third heat exchanger 215 inlet temperature.

The inventors have found that it may be desirable to heat the hydrogen fuel to different temperatures depending on the flight conditions, in order to minimise system design weight, and also minimise fuel consumption.

In general, fuel consumption can be reduced by increasing hydrogen fuel temperature. However, fuel system size is also determined by the degree to which the fuel is heated prior to combustion. Accordingly, it is desirable to heat fuel to a high temperature to minimise Specific Fuel Consumption (SFC), but to a low temperature to minimise weight.

The inventors have found that the weight of the fuel system is however dominated by the take-off conditions, as this is the scenario where the fuel flow is highest. Accordingly, the controller is configured to control the fuel system to heat the fuel to a relatively low temperature at take-off, and to a higher temperature during lower-powered flight conditions, such as at cruise and idle conditions.

Changes may be made to the disclosed embodiment without departing from the invention as defined by the claims. For example, the pre-heater may be omitted, or replaced with a pre-heater that does not require compressed air to operate, such as an electrical heater or a recuperator. Similarly, the gas turbine engine could be of a different form, and could comprise two or even three shafts, with associated compressors and turbines. Examples include turboprop engines, turbojet engines, and hybrid electric gas turbine engines. Similarly, the aircraft could be of a different configuration. Options include aircraft with rear-fuselage mounted engines, and blended wing-body aircraft.

## Claims

1. A fuel system for a hydrogen fuelled gas turbine engine (201), the fuel system comprising:
a main hydrogen fuel line (206) configured to provide hydrogen fuel to a combustor (203) of the gas turbine engine (201);
a closed loop heat exchange fluid line (207) comprising a heat exchange fluid;
a first heat exchanger (208) configured to exchange heat between air and heat exchange fluid in the heat exchange fluid line (207);
a second heat exchanger (209) downstream of the first heat exchanger (208) in heat exchange fluid flow configured to exchange heat between the heated heat exchange fluid and hydrogen in the main hydrogen fuel line; and
a third heat exchanger (215) downstream in heat exchange fluid flow of the second heat exchanger (209) and upstream in heat exchange fluid flow of the first heat exchanger (208) and configured to exchange heat between a further engine fluid and heat exchange fluid.

2. A fuel system according to claim 1, wherein the first heat exchanger (208) is configured to exchange heat between heat exchange fluid and one or more source of engine core air, such as engine compressor bleed air or core turbine air.

3. A fuel system according to claim 2, wherein the fuel system comprises an auxiliary combustor (211) configured to combust hydrogen fuel with engine compressor bleed air prior to provision of the compressor bleed air to the first heat exchanger (208).

4. A fuel system according to claim 1, wherein the first heat exchanger (208) is configured to exchange heat between heat exchange fluid and fan bypass air.

5. A fuel system according to any of the preceding claims, wherein the second heat exchanger (209) is configured to exchange heat between hydrogen and a further engine fluid comprising one or more of engine lubricant and hydraulic fluid.

6. A fuel system according to any of the preceding claims, wherein the fuel system comprises a second heat exchanger hydrogen bypass line (217) configured to selectively bypass hydrogen around the second heat exchanger (209).

7. A fuel system according to any of the preceding claims, wherein the fuel system comprises a heat exchange fluid pump (214) configured to drive flow around the closed loop heat exchange fluid line.

8. A fuel system according to claim 7, wherein the heat exchange fluid pump (214) is provided downstream of the second heat exchanger (209) and upstream of the third heat exchanger (215) in heat exchange fluid flow.

9. A fuel system according to any of the preceding claims, wherein the heat exchange fluid line (207) is configured to contain a heat exchange fluid comprising an inert gas such as helium or nitrogen.

10. A fuel system according to any of the preceding claims, wherein the fuel system comprises a controller (219) configured to control hydrogen fuel temperature and further engine fluid temperature.

11. A fuel system according to claim 10, wherein the controller (219) is configured to control hydrogen fuel temperature by controlling one or more of compressor bleed air flow rate, auxiliary combustor (211) fuel flow rate, heat exchange fluid flow rate, and second heat exchanger (209) bypass flow rate.

12. A fuel system according to claim 10 or claim 11, wherein the controller (219) is configured to control further engine fluid temperature by controlling hydrogen fuel temperature at an outlet of the second heat exchanger (209).

13. A fuel system according to claim 5 or any claim dependent thereon and claim 10 or any claim dependent thereon, wherein the controller (219) is configured to control engine lubricant temperature to a target temperature of between 230 and 340 Kelvin.

14. A fuel system according to claim 10 or any claim dependent thereon, wherein the controller (219) is configured to control hydrogen fuel combustor delivery temperature to a temperature between 60 to 800 K.

15. A propulsion system comprising a gas turbine engine (201) and a fuel system according to any of the preceding claims.
